# EUROPEAN PATENT SPECIFICATION

(11) **EP 3 534 575 B1**
(45) Date of publication and mention of the grant of the patent: **19.01.2022**
(21) Application number: 18863808.4
(22) Date of filing: 27.02.2018
(51) Int. Cl.: H04L 12/26, H04L 12/725, H04L 12/851, H04L 29/06

(54) **METHOD FOR IDENTIFYING SINGLE PACKET, AND TRAFFIC GUIDING METHOD**
VERFAHREN ZUR IDENTIFIZIERUNG EINES EINZELPAKETS UND VERKEHRSLEITUNGSVERFAHREN
PROCÉDÉ D'IDENTIFICATION D'UN PAQUET UNIQUE, ET PROCÉDÉ DE GUIDAGE DE TRAFIC

(30) Priority: 05.01.2018 CN 201810010981
(43) Date of publication of application: 04.09.2019
(73) Proprietor: Wangsu Science & Technology Co., Ltd., Shanghai 200030 (CN)
(72) Inventor: HUANG, Zhihui, Shanghai 200030 (CN); LIU, Xiaopeng, Shanghai 200030 (CN)
(74) Representative: de Arpe Fernandez, Manuel
(86) International application number: PCT/CN2018/077428
(87) International publication number: WO 2019/134239

(56) References cited:
- CN-A- 102 325 078
- CN-A- 102 325 124
- CN-A- 105 591 973
- CN-A- 106 789 725
- US-A1- 2005 078 668
- US-A1- 2007 121 615
- US-A1- 2015 055 657
- US-B1- 7 570 586
- US-B2- 8 724 496
- US-B2- 8 982 887

## Description

### FIELD OF THE DISCLOSURE

The present disclosure relates to the field of Internet technologies and, more particularly, relates to a traffic redirection method.

### BACKGROUND

In general, different applications have different requirements for the quality of network links. For example, a video application often requires a lower link quality than a gaming application. In practical situations, each network link carries a limited amount of traffic. Thus, when the video application and the gaming application shares a same high-quality network link, it is likely that the overloaded link degrades user's experience of accessing Internet. Similarly, when an application requiring a high-quality link is assigned to a poor-quality link for purpose of load balancing, the user's experience of accessing Internet may also be degraded. Thus, it is important to properly assign and redirect traffic of different applications.

The inventors of the present invention discovered that the existing technology redirects traffic based on server IP addresses. Such traffic assignments are pertaining to different servers, rather than different applications. Thus, it is unable to assign links to satisfy different requirements of different applications.

The document US 2015/0055657 A1 discloses a method comprising receiving at a network device a plurality of packets associated with a flow. Based on the content of one or more packets, the network device identifies an application associated with the flow.

The document US 2007/0121615 A1 discloses a technique for implemented deep-packet inspection services in a MPLS/VPN network.

The document US 2005/008668 A1 discloses a method for providing redirect services, which involves a service selection network element used to provide access of devices to a set of services.

The document US 8724496 B2 discloses a system and method for integrating line-rate application recognition in a switch ASIC. A deep packet inspection system can be embodied in a switch ASIC using a flow tracker and a signature matching engine.

### BRIEF SUMMARY OF THE DISCLOSURE

The objective of the embodiments of the present disclosure is to provide a single packet recognition method and a traffic redirection method, to recognize an application sent a traffic data packet and assigns a routing path based on a pre-configured routing policy corresponding to the recognized application. Thus, network traffic redirection is optimized, and service quality of back-end link and user's experience of accessing Internet are improved.

To solve the aforementioned technical problems, the invention is set out in the appended set of claims.

### BRIEF DESCRIPTION OF THE DRAWINGS

One or more embodiments are provided for exemplary descriptions with reference to the accompanying drawings. The exemplary descriptions are not intended to limit the scope of the embodiments. Elements having same reference numerals in the drawings refer to same or similar elements. Unless specifically stated otherwise, the drawings do not constitute limitation on proportions.
FIG. 1 illustrates a flow chart of an exemplary single packet recognition method according to disclosed embodiments;
FIG. 2 illustrates a flow chart of another exemplary single packet recognition method according to disclosed embodiments;
FIG. 3 illustrates a flow chart of another exemplary single packet recognition method according to disclosed embodiments; and
FIG. 4 illustrates a flow chart of an exemplary traffic redirection method according to disclosed embodiments.

### DETAILED DESCRIPTION

To make the objectives, technical solutions, and advantages of the present disclosure clearer, the following further describes the embodiments of the present disclosure in details with reference to the accompanying drawings. It should be understood that the specific embodiments described herein are only used to explain the present disclosure and are not used to limit the present disclosure.

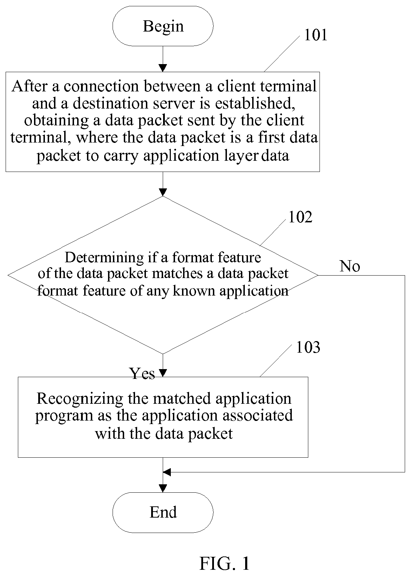

The present disclosure provides a single packet recognition method, and detailed processes are illustrated in FIG. 1.

Step 101: after a connection between a client terminal and a destination server is established, obtaining a data packet sent by the client terminal, where the data packet is a first data packet to carry application layer data.

In one embodiment, the connection established between the client terminal and the destination server may be a transmission control protocol (TCP) connection, a user datagram protocol (UDP) connection, or a connection based on other transmission protocol, which is not limited by the present disclosure. After the connection between the client terminal and the destination server is established, the client terminal may exchange data with the destination server through the connection.

In one embodiment, the method may be implemented based on a proxy program. The proxy program may run on ingress devices or on a central server. The proxy program obtains, from the ingress devices, data packets sent by the client terminal and the destination server through the connection.

Step 102: determining whether a format feature of the data packet matches a data packet format feature of any known application.

In this step, information parsed from specific bytes in application layer data of the data packet may be compared with corresponding features in application data of any known application to determine whether a format feature of the data packet matches a data packet format feature of any known application.

In one embodiment, the connection between the client terminal and the destination server is a TCP connection. The format feature of the application layer data in the data packet sent by an application A includes that the first and second bytes represent a length for a data parsing unit. Because the communication is interactive, when no response is received from the destination server, the client terminal may not send other request again, multiple data parsing units may not be concatenated.Thus, the recorded length is equal to the actual length of the application layer data. The third and fourth bytes represent a fixed value for a version number (e.g., 0xaa, 0xff). The fifth to eighth bytes represent an IP address of the destination server, which is the same as the destination address of packets sent by the client terminal to the destination server or the source address of packets sent by the destination server to the client terminal. The ninth and tenth bytes represent a command field. For the first data packet to carry the application layer data, the value of the command field is "0x00a1", corresponding to "login verification response".

Based on the aforementioned format features of the specific bytes, when the first and second bytes in the application layer data of the received data packet (i.e., the first data packet to carry the application layer data) is a length of a data parsing unit, which is the same as the length recorded in the first and second bytes in the application data of the application A, and when the third and fourth bytes is a fixed value for a version number, which is the same as the fixed value for the version number recorded in the third and fourth bytes in the application data of the application A, and when the fifth through eighth bytes is a server IP address, which is the same as the server IP address recorded in the fifth through eighth bytes in the application data of the application A, and when the ninth and tenth bytes is a command field, which the command field is "0x00a1", it is determined that the information parsed from the specific bytes in the application layer data of the data packet is the same as the corresponding features in the application data of the application A. Thus, the format feature of the data packet matches the data packet format feature of the application A.

It should be noted that different applications may have different format features of the specific bytes. The format features of the specific bytes for the known applications are locally stored in advance for subsequent matching.

When it is determined that a format feature of the data packet matches a data packet format feature of a known application, step 103 is executed. When it is determined that a format feature of the data packet does not match any data packet format feature of any known application, the process is terminated. That is, the process of recognizing data packets is terminated.

Step 103: recognizing the matched application as the application sent the data packet.

For example, when it is determined in step 102 that a format feature of the data packet matches the data packet format feature corresponding to the application A, the application sent the data packet is determined to be the application A in step 103.

Thus, based on the single packet recognition method provided by the embodiment, the application sent the data packet is recognized and determined. Data packets sent by different applications may be assigned to the corresponding routing policies or traffic redirection methods.

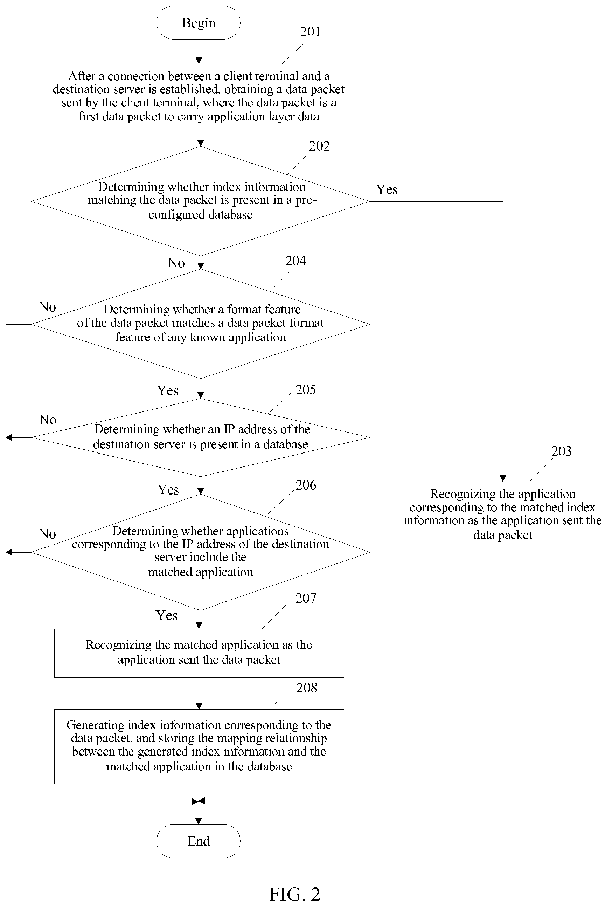

Another embodiment of the present disclosure provides another single packet recognition method, which is an improvement further to the previously described embodiment. The main improvements include that after the matched application is determined based on the format feature of the data packet, it is further determined whether an IP address of the destination server is present in a pre-configured database and whether applications corresponding to the IP address of the destination server include the matched application. The flow chart of an exemplary embodiment is illustrated in FIG. 2.

Step 201: after a connection between a client terminal and a destination server is established, obtaining a data packet sent by the client terminal, where the data packet is a first data packet to carry application layer data.

Step 202: based on an IP address of and a port number of the destination server carried in the data packet, determining whether index information matching the data packet is present in a pre-configured database.

In one embodiment, a database is pre-configured. The database stores mapping relationships between index information and applications. The mapping relationship is collected based on history data. The index information includes an IP address and a port number of a server.

In this step, the IP address and the port number of the destination server carried in the data packet is extracted first. It is determined whether the index information corresponding to the IP address and the port number of the destination server is present in the database. When it is determined that the index information is present, the corresponding index information is the index information sent the data packet, and step 203 is executed. When it is determined that the index information is absent, the index information sent the data packet is absent in the database, and step 204 is executed.

Step 203: recognizing the application corresponding to the matched index information as the application sent the data packet.

As described above, because the database stores the mapping relationships between the index information and the applications, when it is determined that the index information matching the data packet is present in the database, it is determined that the application corresponding to the matched index information is the application sent the data packet.

Step 204: determining whether a format feature of the data packet matches a data packet format feature of any known application. When it is determined that a format feature of the data packet matches a data packet format feature of a known application, step 205 is executed. When it is determined that no format feature of the data packet matches any data packet format feature of any known application, the process is terminated.

Step 205: determining whether an IP address of the destination server is present in a database. When the IP address of the destination server is present, step 206 is executed. When the IP address of the destination server is absent, the process is terminated. That is, the process of recognizing data packets is terminated.

Step 206: determining whether applications corresponding to the IP address of the destination server include the matched application.

After it is determined that the IP address of the destination server is present in the database, applications corresponding to the IP address of the destination server are searched in the database to determine whether the corresponding applications include the matched application determined in step 204. When the corresponding applications include the matched application, step 207 is executed. Otherwise, the process is terminated. That is, the process of recognizing data packets is terminated.

Step 207: recognizing the matched application as the application sent the data packet.

Step 208: generating index information corresponding to the data packet, and storing the mapping relationship between the generated index information and the matched application in the database.

In this step, the IP address and the port number of the destination server may be used to generate the index information corresponding to the data packet, and the mapping relationship between the generated index information and the matched application is stored in the database. Thus, when the connection between the client terminal and the destination server is established next time, the IP address and the port number of the server may be used directly to search the corresponding application in the database, thereby improving the recognition efficiency.

It should be noted that, in this embodiment, a timeout timer is configured for each record in the database (a record is a mapping relationship between a set of index information and an application). When the timeout timer expires, the record is deleted from the database (i.e., the mapping relationship between the set of the index information and the application is deleted). This is because an application corresponding to a port number of a server is subject to change. For example, the application A may be replaced by the application B. In the embodiment, after the mapping relationship between the index information and the application is stored in the database, the mapping relationship between the port number of the current server and the application is fixed. However, in practical applications, the application corresponding to the port number of the current server is subject to change. For example, the application A may be replaced by the application B. Thus, each record in the database is configured with a timeout timer. When the timeout timer expires, the corresponding record is deleted. False recognition of the application B as the application A may be avoided.

In addition, it is worth mentioning that the present embodiment is illustrated by the index information including the IP address and the port number of the server. However, in practical applications, the index information may further include a protocol type (e.g., TCP or UDP) for a connection between the client terminal and the server, which is likely to improve the accuracy of recognizing the application. At this point, in step 202, the IP address of the destination server, the port number of the destination server, and the protocol type between the client terminal and the destination server carried in the data packet may be simultaneously extracted. Based on the IP address of the destination server, the port number of the destination server, and the protocol type, whether any index information matching the data packet is present in the database is determined. In step 208, the IP address of the destination server, the port number of the destination server, and the protocol type are required to generate the index information corresponding to the data packet.

Further, in this embodiment, after the matched application is determined based on the format feature of the data packet, it is further determined whether the IP address of the destination server is present in the pre-configured database and whether the applications corresponding to the IP address of the destination server include the matched application. Thus, the efficiency of recognizing the network traffic is improved, and the rate of false recognition is reduced. At the same time, storing the mapping relationship between the index information and the application allows to directly search for the application sent the data packet in the database when the connection between the client terminal and the destination server is established next time, thereby improving the efficiency of recognizing the data packet.

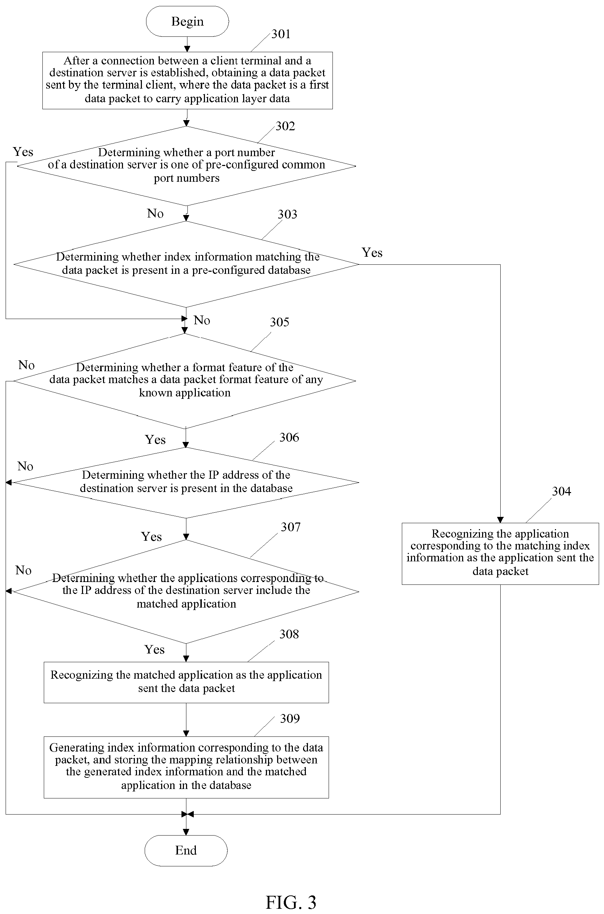

Another embodiment of the present disclosure provides another single packet recognition method, which is an improvement further to the previously described embodiment. The main improvements include that before whether the index information matching the data packet is present in the database is determined, it is determined whether a port number of the destination server is one of pre-configured common port numbers. The flow chart of an exemplary embodiment is illustrated in FIG. 3.

Step 301: after a connection between a client terminal and a destination server is established, obtaining a data packet sent by the client terminal, where the data packet is a first data packet to carry application layer data.

Step 302: determining whether a port number of a destination server is one of pre-configured common port numbers.

In this step, the port number of the destination server carried in the data packet is extracted first to determine whether the port number of the destination server is one of the pre-configured common port numbers (e.g., in a TCP connection, server port numbers 443, 80, 8080). When it is determined that the port number is not any pre-configured common port number, step 303 is executed. When it is determined that the port number is one of the pre-configured common port numbers, step 305 is executed.

Step 303: based on an IP address and a port number of the destination server carried in the data packet, determining whether index information matching the data packet is present in a pre-configured database. When it is determined that the index information is present in the pre-configured database, step 304 is executed. When it is determined that the index information is absent in the pre-configured database, step 305 is executed.

Step 304: recognizing the application corresponding to the matched index information as the application sent the data packet.

Step 305: determining whether a format feature of the data packet matches a data packet format feature of any known application. When it is determined that the format feature of the data packet matches a data packet format feature of a known application, step 306 is executed. When it is determined that the format feature of the data packet does not match a data packet format feature of any known application, the process is terminated.

Step 306: determining whether the IP address of the destination server is present in the database. When it is determined that the IP address is present, step 307 is executed. When it is determined that the IP address is absent, the process is terminated. That is, the process of recognizing data packets is terminated.

Step 307: determining whether the applications corresponding to the IP address of the destination server include the matched application. When the corresponding applications include the matched application, step 308 is executed. Otherwise, the process is terminated. That is, the process of recognizing data packets is terminated.

Step 308: recognizing the matched application as the application sent the data packet.

Step 309: generating index information corresponding to the data packet, and storing the mapping relationship between the generated index information and the matched application in the database.

With respect to the existing technology, embodiments of the present disclosure first determine whether the port number is one of the common port numbers and based on the result of the port number determination, different steps are executed. Thus, false recognition caused by the common port numbers of servers may be avoided.

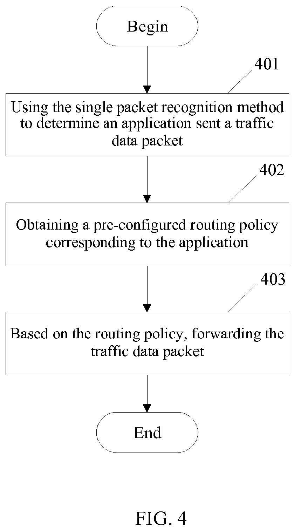

The present disclosure also provides a traffic redirection method. The traffic redirection method is based on any of the aforementioned single packet recognition methods. The flow chart of an exemplary traffic redirection method is illustrated in FIG. 4.

Step 401: using the single packet recognition method to determine an application sent a traffic data packet.

After a connection between a client terminal and a destination server is established, a first data packet to carry the application layer data is obtained first, and based on any of the single packet recognition methods provided by various embodiments of the present disclosure, an application sent the data packet is determined.

Step 402: obtaining a pre-configured routing policy corresponding to the application.

Because different applications require different routing path qualities, the embodiment may pre-configure a routing requirement for each type of applications and assign a routing policy corresponding to the application. After the application sent the data packet is determined, the routing policy corresponding to the application is obtained.

Step 403: based on the routing policy, forwarding the traffic data packet.

After the routing policy is obtained, a routing path is assigned for the traffic data packet based on the routing policy, and the data packet is transmitted through the routing path. Other data packets transmitted through the connection may be transmitted through the same routing path. That is, the routing path is assigned only once in the embodiment.

With respect to the existing technology, the embodiments of the present disclosure first recognize the application sent the traffic data packet. Based on the pre-configured routing policy corresponding to the associated application, the data packet is forwarded. Thus, network traffic redirection is optimized, and service quality of back-end link and user's experience of accessing Internet are improved.

The steps in various methods are divided for the clarity of illustration. In practical applications, multiple steps may be combined into one step, or one step may be separated into multiple steps. As long as the same logical relationship is preserved, modifications and changes are within the scope of the present disclosure. Insignificant modifications may be added or insignificant designs may be introduced in the algorithm or process. When the core design of the algorithm or process remains the same, such modifications and changes shall fall within the scope of the present disclosure.

It should be understood by those skilled in the art that the foregoing are merely certain preferred embodiments of the present disclosure, and are not intended to limit the present disclosure.

## Claims

1. A traffic redirection method, comprising:
determining an application that sent a traffic data packet based on a single packet recognition step (401);
obtaining a pre-configured routing policy corresponding to the application (402); and
based on the routing policy, forwarding the traffic data packet (403);
the single packet recognition step, comprising:
after a connection between a client terminal and a destination server is established, obtaining a data packet sent by the client terminal, wherein the data packet is a first data packet to carry application layer data (101, 201, 301) and the data packet carries an IP address of the destination server;
determining whether a format feature of the application layer data of the data packet matches a data packet format feature of any known application (102; 204; 305); wherein the format feature of the application layer data is a content of specific bytes in the application layer data of the data packet; and
when it is determined that the format feature of the application layer data matches a data packet format feature of a known application, determining whether the IP address of the destination server is present in a pre-configured database (205; 306); and
when it is determined that the IP address of the destination server is present in the pre-configured database and applications corresponding to the IP address of the destination server include the matched application (206; 307), recognizing the matched application as the application which sent the data packet (103; 203, 207; 304, 308);
wherein the determining whether a format feature of the application layer data of the data packet matches a data packet format feature of any known application includes:
determining whether information parsed from the specific bytes in the application layer data of the data packet is the same as corresponding features in application data of any known application.

2. The traffic redirection method of claim 1, wherein:
the data packet also carries a port number of the destination server; and
before the determining whether the format feature of the application layer data of the data packet matches a data packet format feature of any known application, the single packet recognition step further includes:
based on the IP address and the port number of the destination server carried in the data packet, determining whether index information matching the data packet is present in a database (202; 303), wherein the index information includes the IP address and the port number of the server and the database stores mapping relationship between index information and applications (203, 208);
when it is determined that the index information matching the data packet is present in the database, recognizing the application corresponding to the index information as the application which sent the data packet; and
when it is determined that the index information matching the data packet is absent in the database, determining whether the format feature of the application layer data of the data packet matches a data packet format feature of any known application.

3. The traffic redirection method of claim 2, wherein:
before the determining whether any index information matching the data packet is present in the database, the single packet recognition step further includes:
determining whether the port number of the destination server is one of pre-configured common port numbers (302);
when it is determined that the port number of the destination server is not any pre-configured common port number, determining whether any index information matching the data packet is present in the database; and
when it is determined that the port number of the destination server is one of the pre-configured common port numbers, determining whether a format feature of the application layer data of the data packet matches a data packet format feature of any known application.

4. The traffic redirection method of claim 2, wherein:
the data packet further carries a protocol type for the connection between the client terminal and the destination server;
the index information further includes the protocol type for the connection between the client terminal and the destination server; and
the determining whether any index information matching the data packet is present in the database further includes:
based on the IP address and the port number of the destination server and the protocol type that are carried in the data packet, determining whether any index information matching the data packet is present in the database.

## Patentansprüche

1. Eine Verkehrsunleitungsmethode, die Folgendes umfasst:
Bestimmung einer Anwendung, die basierend auf einem Erkennungsschritt (401) eines einzelnen Pakets ein Verkehrsdatenpaket sendet;
durch Erfassen von konfigurierten, der Anwendung (402) entsprechenden Routing-Richtlinien und basierend auf den Routing-Richtlinien, Senden des Verkehrsdatenpaekts (403);
wobei der Erkennungsschritt eines einzelnen Pakets Folgendes umfasst:
nachdem eine Verbindung zwischen einem Kundenterminal und einem Zielserver hergestellt wurde, Erhalt eines vom Kundenterminal gesandten Datenpakets, wobei das Datenpaket ein erstes Datenpaket ist, das Anwendungsschichtdaten weiterleitet (101, 201, 201) und das Datenpaket eine IP-Adresse vom Zielserver weiterleitet;
Bestimmung, ob die Formatfunktion der Anwendungsschichtdaten des Datenpakets mit einer Datenpaketformatfunktion irgendeiner bekannten Anwendung übereinstimmt (102; 204; 305); wobei die Formatfunktion der Anwendungsschichtdaten ein Inhalt von spezifischen Bytes in den Anwendungsschichtdaten des Datenpakets ist; und
wenn bestimmt wird, dass die Formatfunktion der Anwendungsschichtdaten zu einer Datenpaketformatfunktion der bekannten Anwendung passt, Bestimmung, ob die IP-Adresse des Zielservers in einer vorher konfigurierten Datenbank (205; 306) vorhanden ist; und
wenn bestimmt wird, dass die IP-Adresse des Zielservers in der vorher konfigurierten Datenbank vorhanden ist und die der IP-Adresse des Zielservers entsprechenden Anwendungen die passende Anwendung einschliessen (206; 307), Identifizierung der passenden Anwendung als die vom Datenpaket gesandte Anwendung (103; 203; 207; 304; 308);
wobei die Bestimmung, ob die Formatfunktion der Anwendungsschichtdaten des Datenpakets zu einer Datenpaketformatfunktion irgendeiner bekannten Anwendung passt, Folgendes einschliesst:
Bestimmung, ob die aus den spezifischen Bytes in den Anwendungsschichtdaten des Datenpakets analysierte Information dieselbe ist, wie die entsprechenden Funktionen in den Anwendungsdaten irgendeiner bekannten Anwendung.

2. Die Verkehrsumleitungsmethode gemäss Anspruch 1, bei der das Datenpaket auch eine Port-Nummer des Zielservers trägt, und bevor bestimmt wird, ob die Formatfunktion der Anwendungsschichtdaten des Datenpakets zu einer Datenpaketformatfunktion irgendeiner bekannten Funktion passt, der Identifizierunsschritt des Einzelpakets Folgendes einschliesst:
Basierend auf der IP-Adresse und der Port-Nummer des im Datenpaket eingeschlossenen Zielservers wird bestimmt, ob die zu dem Datenpaket passende Index-Information in einem Datenpaket (202; 303) vorhanden ist, wobei die Index-Information die IP-Adresse und Port-Nummer des Servers einschliesst, und die Datenbank die Zuordnungsbeziehung zwischen der Index-Information und den Anwendungen (203; 208) speichert;
wenn bestimmt wird, dass die zum Datenpaket passende Index-Information in der Datenbank vorhanden ist, Identifizierung der der Index-Information entsprechenden Anwendung als die vom Datenpaket gesandte Anwendung; und
wenn bestimmt wird, dass die zum Datenpaket passende Index-Information nicht in der Datenbank vorhanden ist, wird festgestellt, ob die Formatfunktion der Anwendungsschichtdaten des Datenpakets mit einer Datenpaketformatfunktion irgendeiner bekannten Anwendung übereinstimmt.

3. Die Verkehrsumleitungsmethode gemäss Anspruch 2, bei der:
Bevor bestimmt wird, ob irgendeine, zum Datenpaket passende Index-Information in der Datenbank vorhanden ist, schliesst der einzelne Paketidentifizierungsschritt weiter Folgendes ein:
Feststellung, ob die Port-Nummer des Zielservers eine der vorkonfigurierten, allgemeinen Port-Nummern (302) ist;
wenn festgestellt wird, dass die Port-Nummer des Zielservers keine vorkonfigurierte, allgemeine Port-Nummer ist, Feststellung, ob irgendeine, zu dem Datenpaket passende Index-Information in der Datenbank vorhanden ist; und
wenn festgestellt wird, dass die Port-Nummer des Zielservers eine der vorkonfigurierten, allgemeinen Port-Nummern ist, Feststellung, ob eine Formatfunktion der Anwendungsschichtdaten des Datenpakets zu der Datenpaketformatfurnktion irgendeiner, bekannten Anwendung passt.

4. Die Verkehrsumleitungsmethode gemäss Anspruch 2, bei der das Datenpaket weiter eine Protokollart für die Verbindung zwischen dem Endkunden und dem Zielserver trägt,
die Index-Information ausserdem die Protokollart für die Verbindung zwischen dem Endkunden und dem Zielserver einschliesst; und
die Feststellung, ob irgendeine, zum Datenpaket passende Index-Information in der Datenbank vorhanden ist, weiter Folgendes einschliesst:
Basierend auf der IP-Adresse und der Port-Nummer des Zielservers und der Protokollart, die mit dem Datenpaket übertragen werden, Feststellung, ob irgendeine zu dem Datenpaket passende Index-Information in der Datenbank vorhanden ist.

## Revendications

1. Une méthode de redirection du trafic, comprenant:
déterminer l'application qui a envoyé le paquet de données du trafic sur la base d'une opération de reconnaissance d'un seul paquet (401);
obtenir la politique de routage préconfigurée correspondant à l'application (402); et, sur la base de la politique de routage, transférer le paquet de données de trafic (403); l'opération de reconnaissance d'un seul paquet comprenant:
après que la connexion entre le terminal client et le serveur de destination soit établie, obtenir le paquet de données envoyé par le terminal client, où le paquet de données est un premier paquet de données qui transporte les données de la couche d'application (101, 201, 301) et le paquet de données transporte une adresse IP du serveur de destination;
déterminer si la fonction de format des données de la couche d'application du paquet de données s'apparie à la fonction de format des données d'une quelconque application connue (102 ; 204 ; 305); où la fonction de format des données de la couche d'application est un contenu de bytes spécifiques dans les données de la couche d'application du paquet de données; et
s'il est déterminé que la fonction de format des données de la couche d'application s'apparie à une fonction de format du paquet de données d'une application connue, déterminer si l'adresse IP du serveur de destination est présente dans une base de données préconfigurée (205; 306); et
s'il est déterminé que l'adresse IP du serveur de destination est présente dans la base de données préconfigurée et que les applications correspondant à l'adresse IP du serveur de destination incluent l'application concordante (206; 307), reconnaître l'application concordante comme application qui a envoyé le paquet de données (103; 202; 207; 304; 308);
où le fait de déterminer si la fonction de format des données de la couche d'application du paquet de donnés s'apparie à la fonction de format du paquet de données de l'une quelconque des applications connues comprend:
déterminer si l'information séparée des bytes spécifiques des données de la couche d'application du paquet de données est la même que les fonctions correspondantes des données d'application de l'une quelconque des applications connues.

2. La méthode de redirection du trafic de la revendication 1, où:
le paquet de données transporte aussi un numéro de port du serveur de destination, et, avant de déterminer si la fonction de format des données de la couche d'application du paquet de données s'apparie à la fonction de format du paquet de données de l'une quelconque des applications connues, l'opération de reconnaissance d'un seul paquet comprend en outre:
sur la base de l'adresse IP et du numéro de port du serveur de destination transportés dans le paquet de données, déterminer si l'information d'index s'appariant au paquet de données est présente dans la base de données (202; 303), où l'information d'index inclue l'adresse IP et le numéro de port du serveur, et la base de données stocke les relations de correspondance entre l'information d'index et les applications (203, 208);
s'il est déterminé que l'information d'index qui s'apparie au paquet de donnés est présente dans la base de données, reconnaître l'application correspondant à l'information d'index comme l'application qui a envoyé le paquet de données; et
s'il est déterminé que l'information d'index qui s'apparie au paquet de données est absente de la base de données, déterminer si la fonction de format des données de la couche d'application du paquet de données s'apparie à la fonction de format du paquet de données de l'une quelconque des applications connues.

3. La méthode de redirection du trafic de la revendication 2, où:
avant de déterminer si une information d'index quelconque s'appariant au paquet de données est présente dans la base de données, l'opération de reconnaissance d'un seul paquet comprend en outre:
déterminer si le numéro de port du serveur de destination est l'un des numéros de port communs préconfigurés (302);
s'il est déterminé que le numéro de port du serveur de destination ne correspond à aucun des numéros de port communs préconfigurés, déterminer si une information d'index quelconque s'appariant au paquet de données est présente dans la base de données; et
s'il est déterminé que le numéro de port du serveur de destination est l'un des numéros de ports communs préconfigurés, déterminer si la fonction de format des données de la couche d'application du paquet de données s'apparie à la fonction de format du paquet de données de l'une quelconque des applications connues.

4. La méthode de redirection du trafic de la revendication 2, où:
le paquet de données transporte en outre un type de protocole pour la connexion entre le terminal client et le serveur de destination;
l'information d'index comprend en outre le type de protocole pour la connexion entre le terminal client et le serveur de destination; et
le fait de déterminer si une information d'index quelconque du paquet de données est présente dans la base de données inclut en outre:
sur la base de l'adresse IP, du numéro de port du serveur de destination et du type de protocole transportés dans le paquet de données, déterminer si une information d'index quelconque s'appariant au paquet de données est présente dans la base de données.
